# EUROPÄISCHE PATENTSCHRIFT

(11) **EP 2 952 380 B1**
(45) Veröffentlichungstag und Bekanntmachung des Hinweises auf die Patenterteilung: **19.06.2019**
(21) Anmeldenummer: 15168143.4
(22) Anmeldetag: 19.05.2015
(51) Int. Cl.: B60N 2/14

(54) **VORRICHTUNG ZUR ANBRINGUNG EINER DREHEINHEIT AN EINEM FAHRZEUGSITZ SOWIE DREHEINRICHTUNG FÜR EINEN FAHRZEUGSITZ**
DEVICE FOR ATTACHING A ROTARY UNIT TO A VEHICLE SEAT AND ROTATING DEVICE FOR A VEHICLE SEAT
DISPOSITIF DE LIAISON D'UNE UNITÉ ROTATIVE SUR UN SIÈGE DE VÉHICULE ET UNITÉ ROTATIVE POUR UN SIÈGE DE VÉHICULE

(30) Priorität: 05.06.2014 DE 102014107936
(43) Veröffentlichungstag der Anmeldung: 09.12.2015
(73) Patentinhaber: AGUTI PRODUKTENTWICKLUNG & DESIGN GMBH, 88085 Langenargen (DE)
(72) Erfinder: Grieger, Andreas, 88079 Kressbronn (DE); Grieger, Michael, 88079 Kressbronn (DE); Rogg, Christian, 88142 Wasserburg (DE)
(74) Vertreter: Otten, Roth, Dobler & Partner mbB Patentanwälte

(56) Entgegenhaltungen:
- WO-A1-2014/037232
- DE-A1-102004 013 628

## Beschreibung

### Stand der Technik

Dreheinrichtungen für einen Fahrzeugsitz mit einer Dreheinheit sind aus dem Stand der Technik in vielen Ausführungsformen bereits bekannt geworden. Regelmäßig werden Dreheinheiten mittels eines Anbringflansches an einem Sitzgestell angeschraubt. Auf der Oberseite der Dreheinheit werden häufig Einrichtungen angeordnet, um einen darauf angebrachten Fahrzeugsitz linear verschieben zu können.

Die Dreheinheit und die Anbringung der Dreheinheit über einen Flansch muss den Anforderungen an die Stabilität eines Fahrzeugsitzes, insbesondere mit Blick auf ein Verhalten bei einem Crash-Test genügen.

### Aufgabe und Vorteile der Erfindung

Der Erfindung liegt die Aufgabe zugrunde, die Stabilität bei der Anbringung einer Dreheinheit an einem Fahrzeugsitzgestell zu verbessern.

Diese Aufgabe wird durch den Anspruch 1 sowie 8 gelöst.

Der Kerngedanke der Erfindung liegt nun darin, dass an der Basisplatte eine hakenförmige Einhängelasche vorgesehen ist, die dazu ausgestaltet ist, an einem Fahrzeugsitzgestell im montierten Zustand einen dort vorhandenen Querholm zu untergreifen. Damit wird die Basisplatte nicht nur in einer Ebene der Basisplatte, zum Beispiel durch Verschrauben mit dem Fahrzeugsitzgestell verbunden, sondern über die Einhängelasche auch ein am Fahrzeugsitzgestell vorhandener Querholm herangezogen, sodass die Abstützung der Basisplatte und auf der Basisplatte aufgebauter Einheiten eine weitere "Ebene" erhält.

In einer besonders bevorzugten Ausgestaltung ist die Einhängelasche L-förmig. Auf diese Weise lässt sie sich leicht unter eine Quertraverse einfädeln.

Im Weiteren ist es bevorzugt, wenn die Einhängelasche aus der Basisplatte herausgearbeitet ist. Regelmäßig wird an der Basisplatte im Zentrum der Platte ohnehin ein Materialbereich entfernt, der für die Statik der Basisplatte entbehrlich ist. Dieser Abschnitt kann nun genutzt werden, um daraus die Einhängelasche zu formen. Dies kann auf verschiedene Arten erfolgen, beispielsweise durch Erzeugen einer Schnittkontur und anschließendes Abkanten und in Form bringen zur Erzeugung der Einhängelasche.

In einer außerdem vorteilhaften Ausführungsform der Erfindung ist die Einhängelasche derart an der Basisplatte positioniert, dass die Einhängelasche zum Untergreifen eines Querholms ausgebildet ist, der bezogen auf einen montierten Zustand in Fahrtrichtung betrachtet in einem hinteren Bereich eines montierten Sitzgestells quer zur Fahrtrichtung verläuft.

Durch die Anordnung der Einhängelasche auf diese Weise werden Kräfte, die zum Beispiel bei einem Unfall auftreten, nicht nur auf Längsholmen am Sitzgestell übertragen, sondern über die Einhängelasche auch auf den normalerweise tieferliegenden Querholm der ansonsten nicht für die Krafteinleitung zur Verfügung steht.

Insgesamt wird damit die Steifigkeit der Anordnung verbessert und Deformationen bei vergleichbar auftretenden Kräften in einem geringeren Ausmaß gehalten. Letzten Endes kann dadurch die gesamte Anordnung verschlankt werden, ohne die Belastungsfähigkeit zu vermindern. Beispielsweise lassen sich bei der Montage der Basisplatte an zum Beispiel Längstraversen des Fahrzeugsitzgestells Schrauben einsparen.

Um eine einfache Montage zu begünstigen, wird im Weiteren vorgeschlagen, dass die Einhängelasche derart an der Basisplatte vorhanden ist, dass die Einhängelasche im montierten Zustand der Basisplatte nach außen, vom Sitzgestell weg zeigend, offen ist.

Zur Gewährleistung einer effektiven Kraftübertragung auf den Querholm wird überdies vorgeschlagen, dass die Einhängelasche in einer Weise dimensioniert ist, dass die Einhängelasche im montierten Zustand den Querholm untergreift und an diesem satt anliegt.

Im Weiteren wird vorgeschlagen, dass die Einhängelasche sich über lediglich einen Teilabschnitt entlang des Querholms im eingebauten Zustand erstreckt. Bereits eine Teilumgreifung des Querholms in Bezug auf seine freie Länge ist ausreichend, um eine gewünschte Kraftübertragung zu erhalten. Beispielsweise erstreckt sich die Einhängelasche über weniger als 70, 50 oder 40 % der freien Länge des Querholms.

### Beschreibung der Ausführungsbeispiele

Zwei Ausführungsbeispiele der Erfindung sind nachstehend in den Figuren unter Angabe weiterer Vorteile und Einzelheiten näher beschrieben.

Es zeigen:
- Figur 1: einen vollständigen Fahrzeugsitz in einer Frontansicht,
- Figur 2: den Fahrzeugsitz aus Figur 1 in einer perspektivischen Seitenansicht von oben,
- Figur 3: ein Sitzuntergestell mit Dreheinrichtung, so wie in der Ausführungsform nach den Figuren 1 und 2 eingesetzt,
- Figur 4: in vergrößerter Darstellung die Einzelheit B aus Figur 3 und
- Figur 5: in perspektivischer Darstellung von schräg unten das Sitzgestell gemäß Figur 3.

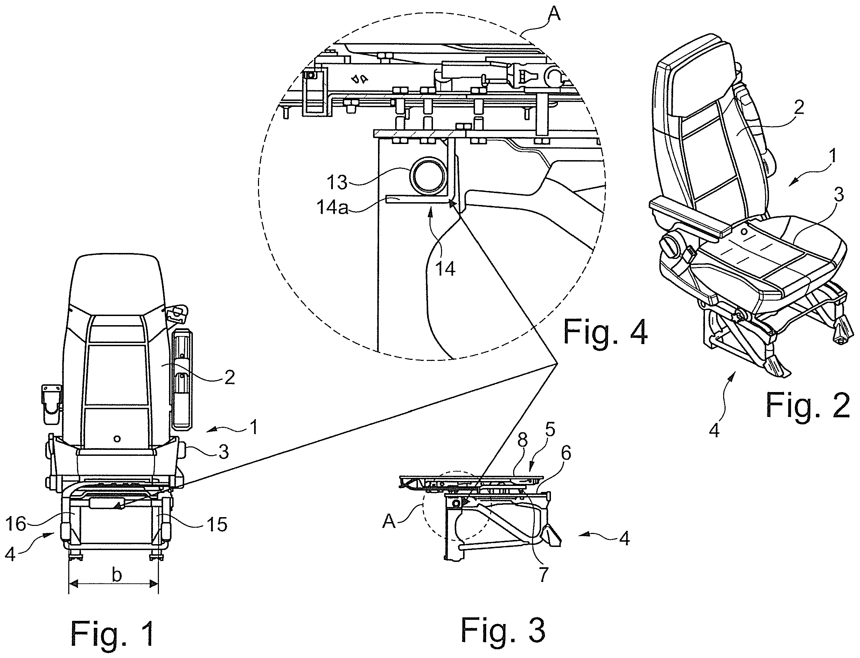

In den Figuren 1 und 2 ist ein Fahrzeugsitz 1 für zum Beispiel ein Wohnmobil dargestellt. Der Fahrzeugsitz 1 umfasst eine Rückenlehne 2 sowie ein Sitzflächenelement 3. Des Weiteren umfasst der Fahrzeugsitz 1 ein Sitzgestell 4. Zwischen Sitzflächenelement 3 und Sitzgestell 4 ist eine Dreheinrichtung 5 (siehe insbesondere Figur 3) angeordnet.

Die Dreheinrichtung 5 umfasst eine Basisplatte 6 zur Verbindung mit dem Sitzgestell 4, eine Dreheinheit 7 zur Bereitstellung einer Drehfunktion sowie einen Montageflansch 8 mit Linearführungen 8a zur Verbindung mit dem Sitzflächenelement 3.

Mit den Linearführungen 8a am Montageflansch 8 lässt sich das Sitzflächenelement 3 mit Rückenlehne 2 linear verschieben, wogegen die Dreheinheit 7 eine Drehbewegung von Sitzflächenelement 3 mit Rückenlehne 2 ermöglicht.

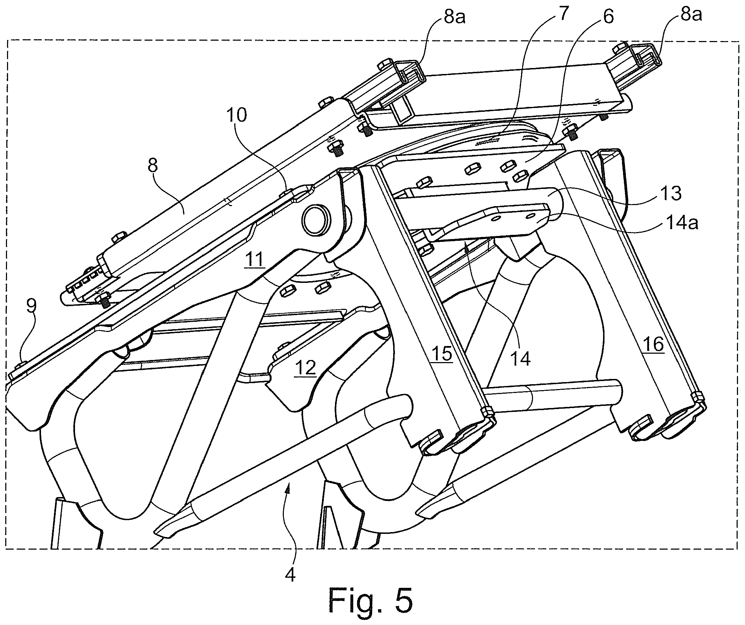

Weitere Details zum Sitzgestell 4 mit Dreheinrichtung 5 bestehend aus Basisplatte 6, Dreheinheit 7 sowie Montageflansch 8 mit Linearführungen 8a sind aus Figur 5 ersichtlich.

Die Basisplatte 6 ist über Schrauben 9, 10 jeweils mit einer linken und rechten Längstraverse 11, 12 des Sitzgestells 4 verschraubt. Denkbar sind auch andere Anbindungstechniken. Im hinteren Bereich bezogen auf eine spätere Montage in einem Fahrzeug umfasst das Sitzgestell 4 eine Quertraverse 13 unterhalb der Ebene der Längstraversen 11, 12.

Die Basisplatte 6 besitzt eine Einhängelasche 14, die die Quertraverse 13 mit einem horizontalen Schenkel 14a, insbesondere satt untergreift (siehe Figur 4).

Damit lassen sich mit der Einhängelasche 14 Kräfte, die an der Dreheinrichtung 5 in einer Montagelage betrachtet einen Kraftanteil nach oben besitzen, auf die Quertraverse 13 übertragen.

Damit wird der ganze Sitzunterbau insgesamt versteift. Es findet durch die Abstützung an der Quertraverse 13 über die Einhängelasche 14 zudem eine Reduzierung der Deformation der Dreheinrichtung 5 statt, wenn vergleichsweise hohe Kräfte wie beispielsweise bei einem Unfall eingeleitet werden.

Bislang wurden Dreheinrichtungen 5 lediglich an Längstraversen 11, 12 verbunden, insbesondere durch die bereits erwähnten Schrauben 9, 10.

Die Einhängelasche 14 wurde in dem dargestellten Ausführungsbeispiel aus dem Material der Basisplatte 6 herausgearbeitet, durch zum Beispiel Ausschneiden der Kontur und anschließendes zweifaches Umkanten.

Denkbar ist auch, dass zusätzlich zum Untergreifen der Quertraverse 13 die durch Einhängelasche 14 diese mit der Quertraverse 13 zum Beispiel mittels Schrauben verbunden ist.

Ebenso möglich ist es, dass die Einhängelasche 14 die Quertraverse 13 nicht nur an einer Seite und unten untergreift, sondern in einer Weise hakenförmig ausgebildet ist, dass auch eine gegenüberliegende seitliche Fläche der Quertraverse 13 überdeckt ist.

Die Einhängelasche 14 verläuft, wie aus Figur 1 ersichtlich, lediglich über einen Teilbereich der Breite b der Quertraverse 13 zwischen senkrechten Profilelementen 15, 16 des Sitzgestells 4.

### Bezugszeichenliste:

- 1: Fahrzeugsitz
- 2: Rückenlehne
- 3: Sitzelement
- 4: Sitzgestell
- 5: Dreheinrichtung
- 6: Basisplatte
- 7: Dreheinheit
- 8: Montageflansch
- 8a: Linearführung
- 9: Schraube
- 10: Schraube
- 11: Längstraverse
- 12: Längstraverse
- 13: Quertraverse
- 14: Einhängelasche
- 14a: Schenkel
- 15: Profilelement
- 16: Profilelement

## Patentansprüche

1. Dreheinrichtung für einen Fahrzeugsitz (1) mit einer Dreheinheit (7), einem auf der Dreheinheit (7) angeordneten Montageflansch (8), sowie einer Vorrichtung zur Anbringung der Dreheinheit (7) an einem Fahrzeugsitzgestell (4), wobei die Vorrichtung aus einer Basisplatte (6) zur Verbindung mit dem Fahrzeugsitzgestell (4) besteht, wobei auf dem Fahrzeugsitzgestell (4) die Dreheinheit (7) und/oder ein Sitz anordenbar ist, **dadurch gekennzeichnet, dass** an der Basisplatte (6) eine hakenförmige Einhängelasche (14) vorgesehen ist, die dazu ausgestaltet ist, an dem Fahrzeugsitzgestell (4) im montierten Zustand einen Querholm (13) zu untergreifen.

2. Dreheinrichtung für einen Fahrzeugsitz (1) nach Anspruch 1, **dadurch gekennzeichnet, dass** die Einhängelasche (14) L-förmig ist.

3. Dreheinrichtung für einen Fahrzeugsitz (1) nach einem der vorhergehenden Ansprüche, **dadurch gekennzeichnet, dass** die Einhängelasche (14) aus der Basisplatte (8) herausgearbeitet ist.

4. Dreheinrichtung für einen Fahrzeugsitz (1) nach einem der vorhergehenden Ansprüche, **dadurch gekennzeichnet, dass** die Einhängelasche (14) derart an der Basisplatte (6) positioniert ist, dass die Einhängelasche (14) zum Untergreifen eines Querholms (13) ausgelegt ist, der in Fahrtrichtung betrachtet in einem hinteren Bereich eines montierten Sitzgestells (4) quer zur Fahrtrichtung verläuft.

5. Dreheinrichtung für einen Fahrzeugsitz (1) nach einem der vorhergehenden Ansprüche, **dadurch gekennzeichnet, dass** die Einhängelasche (14) derart an der Basisplatte (6) vorhanden ist, dass die Einhängelasche (14) im montierten Zustand der Basisplatte nach außen, vom Sitzgestell (4) wegzeigend, offen ist.

6. Dreheinrichtung für einen Fahrzeugsitz (1) nach einem der vorhergehenden Ansprüche, **dadurch gekennzeichnet, dass** die Einhängelasche (14) in einer Weise dimensioniert ist, dass die Einhängelasche (14) im montierten Zustand den Querholm (13) untergreift und an diesem satt anliegt.

7. Dreheinrichtung für einen Fahrzeugsitz (1) nach einem der vorhergehenden Ansprüche, **dadurch gekennzeichnet, dass** die Einhängelasche (14) sich über lediglich einen Teilabschnitt entlang des Querholms (13) im eingebauten Zustand erstreckt.

8. Fahrzeugsitz (1) mit einer Dreheinrichtung nach einem der vorangegangenen Ansprüche.

## Claims

1. Rotating device for a vehicle seat (1) with a rotating unit (7), a mounting flange (8) arranged on the rotating unit (7) and a device for attaching the rotating unit (7) onto a vehicle seat frame (4), wherein the device consists of a base plate (6) for connecting to the vehicle seat frame (4), wherein on the vehicle seat frame (4) the rotating unit (7) and/or a seat can be arranged, **characterised in that** on the base plate (6) a hook-like suspension bracket (14) is provided which is configured to grip under a crossbar (13) on the vehicle seat frame (4) in the mounted state.

2. Rotating device for a vehicle seat (1) according to claim 1, **characterised in that** the suspension bracket (14) is L-shaped.

3. Rotating device for a vehicle seat (1) according to any of the preceding claims, **characterised in that** the suspension bracket (14) is worked out of the base plate (8).

4. Rotating device for a vehicle seat (1) according to any of the preceding claims, **characterised in that** the suspension bracket (14) is positioned on the base plate (6) such that the suspension bracket (14) is configured for gripping under a crossbar (13), which as viewed in the direction of travel runs in a rear section of a mounted seat frame (4) perpendicular to the direction of travel.

5. Rotating device for a vehicle seat (1) according to any of the preceding claims, **characterised in that** the suspension bracket (14) is provided on the base plate (6) such that the suspension bracket (14) is open to the outside in the mounted state of the base plate, pointing away from the seat frame (4).

6. Rotating device for a vehicle seat (1) according to any of the preceding claims, **characterised in that** the suspension bracket (14) is dimensioned in such a way that the suspension bracket (14) in the mounted state grips under the crossbar (13) and bears flush against the latter.

7. Rotating device for a vehicle seat (1) according to any of the preceding claims, **characterised in that** the suspension bracket (14) extends in the installed state only over a portion along the crossbar (13).

8. Vehicle seat (1) with a rotating device according to any of the preceding claims.

## Revendications

1. Dispositif pivotant pour un siège de véhicule (1), comprenant une unité pivotante (7), une bride de montage (8) disposée sur l'unité pivotante (7), et un dispositif pour monter l'unité pivotante (7) sur un châssis de siège de véhicule (4), le dispositif étant constitué d'une plaque de base (6) pour le relier au châssis de siège de véhicule (4), l'unité pivotante (7) et/ou un siège pouvant être disposés sur le châssis de siège de véhicule (4), **caractérisé en ce qu'**une patte de suspension (14) en forme de crochet est prévue sur la plaque de base (6), laquelle patte est conçue pour s'engager, à l'état monté, sous un longeron transversal (13) sur le châssis de siège de véhicule (4).

2. Dispositif pivotant pour un siège de véhicule (1) selon la revendication 1, **caractérisé en ce que** la patte de suspension (14) est en forme de L.

3. Dispositif pivotant pour un siège de véhicule (1) selon l'une des revendications précédentes, **caractérisé en ce que** la patte de suspension (14) est usinée à partir de la plaque de base (8).

4. Dispositif pivotant pour un siège de véhicule (1) selon l'une des revendications précédentes, **caractérisé en ce que** la patte de suspension (14) est positionnée sur la plaque de base (6) de telle sorte que la patte de suspension (14) est conçue pour s'engager sous un longeron transversal (13) qui, considéré dans le sens de la marche, s'étend transversalement au sens de la marche dans une zone arrière d'un cadre de siège (4) monté.

5. Dispositif pivotant pour un siège de véhicule (1) selon l'une des revendications précédentes, **caractérisé en ce que** la patte de suspension (14) est prévue sur la plaque de base (6) de telle sorte que, à l'état monté de la plaque de base, la patte de suspension (14) est ouverte vers l'extérieur en s'écartant du cadre du siège (4).

6. Dispositif pivotant pour un siège de véhicule (1) selon l'une des revendications précédentes, **caractérisé en ce que** la patte de suspension (14) est dimensionnée de telle sorte que, la patte de suspension (14), à l'état monté, s'engage sous le longeron transversal (13) et repose étroitement contre celui-ci.

7. Dispositif pivotant pour un siège de véhicule (1) selon l'une des revendications précédentes, **caractérisé en ce qu'**à l'état monté, la patte de suspension (14) s'étend uniquement sur une section partielle le long du longeron transversal (13).

8. Siège de véhicule (1) avec dispositif pivotant selon l'une des revendications précédentes.
